# EUROPÄISCHE PATENTANMELDUNG

(11) **EP 4 241 631 A1**
(43) Veröffentlichungstag der Anmeldung: **13.09.2023**
(21) Anmeldenummer: 22160527.2
(22) Anmeldetag: 07.03.2022
(51) Int. Cl.: A47J 36/32, A47J 43/07

(54) **KÜCHENMASCHINENSYSTEM, VERFAHREN ZUR STEUERUNG EINES KÜCHENMASCHINENSYSTEMS UND STEUERUNG FÜR EIN KÜCHENMASCHINENSYSTEM**

(71) Anmelder: Vorwerk & Co. Interholding GmbH, 42275 Wuppertal (DE)
(72) Erfinder: Beckmann, Nils, 42853 Remscheid (DE); Lang, Torsten, 42657 Solingen (DE); Sernecki, Miron, 58097 Hagen (DE); Haunschild, Felix, 45239 Essen (DE); Schmitz, Kevin, 42781 Haan-Gruiten (DE)
(74) Vertreter: Cohausz & Florack

(57) **Zusammenfassung**

Die Erfindung betrifft ein Küchenmaschinesystem (2) mit einem ein Gehäuse (10), eine Steuereinrichtung (14) und eine Kommunikationsschnittstelle (16) aufweisenden Grundgerät (4) und mit mindestens einem ein Identifikationsmerkmal aufweisenden Zubehörteil (6, 42). Zur Steigerung der Nutzerfreundlichkeit wird vorgeschlagen, dass eine Erfassungseinrichtung (18) vorgesehen und dazu eingerichtet ist, ein Identifikationsmerkmal mindestens eines Zubehörteils (6, 42) zu erfassen und eine entsprechende Information an die Steuereinrichtung (14) weiterzuleiten, dass eine Positionserfassungseinrichtung (20) vorgesehen und dazu eingerichtet ist, die Position des mindestens einen Zubehörteils (6, 42) in Bezug auf das Grundgerät (4) und / oder in Bezug auf ein weiteres Zubehörteil (6, 42) zu erfassen und eine entsprechende Information an die Steuereinrichtung (14) weiterzuleiten, dass die Steuereinrichtung (14) dazu eingerichtet ist, auf Basis der weitergeleiteten Informationen ein Zubehörteil (6, 42) und seine Position zu erkennen, und dass die Steuereinrichtung (14) dazu eingerichtet ist, eine bestimmungsgemäße Position oder Positionsänderung eines erkannten Zubehörteils (6, 42) automatisch zu bestätigen und bei einer nicht bestimmungsgemäßen Position bzw. Positionsänderung oder bei einem nicht erkannten Zubehörteil (6, 42) einen entsprechenden Nutzerhinweis (48) auszugeben. Beschrieben werden ferner ein entsprechendes Verfahren, ein Steuerungssystem zur Steuerung eines Küchenmaschinesystems und ein entsprechendes Computerprogramm.

## Beschreibung

Die Erfindung betrifft ein Küchenmaschinesystem mit einem ein Gehäuse, eine Steuereinrichtung und eine Kommunikationsschnittstelle aufweisenden Grundgerät und mit mindestens einem ein Identifikationsmerkmal aufweisenden Zubehörteil. Die Erfindung betrifft außerdem ein entsprechendes Verfahren zur Steuerung eines Küchenmaschinesystems und ein Steuerungssystem für ein Küchenmaschinesystem.

Küchenmaschinen der eingangs genannten Art sind bereits bekannt, insbesondere zum Verarbeiten von rohen oder halbfertigen Lebensmittelprodukten. Diese Küchenmaschinen weisen ein Grundgerät auf, mit dem separate Funktionsteile zusammenwirken, um je nach erzieltem Gericht, Getränk oder Ähnliches ein Lebensmittel zu verarbeiten. Funktionsteile werden in der Regel durch Küchenmaschinenanbieter als Zubehörteile verkauft, zum Beispiel als Kochgefäß, Gargefäß, Deckel, Schneide- oder Rühreinheit oder Ähnliches. Im Allgemeinen weisen jeweils das Zubehörteil und das Grundgerät jeweils miteinander kompatible Schnittstellen auf, die ein Zusammenwirken beider Bauteile ermöglichen. Insbesondere kann durch miteinander in Zusammenwirkung gebrachten Schnittstellen ein Antrieb eines beweglichen Elements des Zubehörteils durch einen in dem Grundgerät angeordneten Elektromotor erfolgen.

Oft werden Küchenmaschinesysteme mit einer Auswahl an Zubereitungsanleitungen wie Kochrezepte vertrieben, entsprechend deren Bestandteile des Küchenmaschinesystems gesteuert werden können. Um sicherzustellen, dass die richtigen Zubehörteile zum richtigen Zeitpunkt eingesetzt werden, wird bei bekannten Küchenmaschinesystemen in der Regel eine manuelle Bestätigung durch den Nutzer abgefragt.

Darüber hinaus ist zum Beispiel aus der Druckschrift DE 102013111472 A1 bekannt, aus Sicherheitsgründen einen Zubereitungsschritt am Küchenmaschinesystem zu unterbinden, wenn nicht bestätigt wird, dass das erwartete Zubehörteil bestimmungsgemäß eingesetzt ist.

So stellt eine manuelle Bestätigung einen wichtigen, sogar manchmal erforderlichen Schritt im Ablauf eines Zubereitungsvorgangs mit einer Küchenmaschine der bekannten Art dar. Eine manuelle Bestätigung erfordert allerdings einen gewissen Aufwand seitens des Nutzers und ist außerdem eine Fehlerquelle, die die meisten bekannten Küchenmaschinesysteme nicht selbstständig ausgleichen können. Wurde zum Beispiel ein anderes Zubehörteil als erwartet eingesetzt oder ein sicherheitsbedingtes Zubehörteil vergessen und trotzdem eine manuelle Bestätigung eingegeben, dass das erwartete Zubehörteil richtig eingesetzt wurde, dann kann dies zum Misserfolg des Zubereitungsvorgangs oder gegebenenfalls zur Schädigung des Küchenmaschinesystems bzw. zur Gefahr für den Nutzer führen.

Vor diesem Hintergrund liegt der vorliegenden Erfindung die Aufgabe zu Grunde, bekannte Küchenmaschinesysteme zu verbessern, insbesondere ein Küchenmaschinesystem, ein Verfahren und ein entsprechendes Steuerungssystem anzugeben, bei denen die Nutzerfreundlichkeit und die Erfolgsaussichten eines Zubereitungsvorgangs gesteigert sind.

Diese Aufgabe wird erfindungsgemäß mit einem Küchenmaschinesystem mit einem ein Gehäuse, eine Steuereinrichtung und eine Kommunikationsschnittstelle aufweisenden Grundgerät und mit mindestens einem ein Identifikationsmerkmal aufweisenden Zubehörteil dadurch gelöst, dass eine Erfassungseinrichtung vorgesehen und dazu eingerichtet ist, ein Identifikationsmerkmal mindestens eines Zubehörteils zu erfassen und eine entsprechende Information an die Steuereinrichtung weiterzuleiten, dass eine Positionserfassungseinrichtung vorgesehen und dazu eingerichtet ist, die Position des mindestens einen Zubehörteils in Bezug auf das Grundgerät und / oder in Bezug auf ein weiteres Zubehörteil zu erfassen und eine entsprechende Information an die Steuereinrichtung weiterzuleiten, dass die Steuereinrichtung dazu eingerichtet ist, auf Basis der weitergeleiteten Informationen ein Zubehörteil und seine Position zu erkennen, und dass die Steuereinrichtung dazu eingerichtet ist, eine bestimmungsgemäße Position oder Positionsänderung eines erkannten Zubehörteils automatisch zu bestätigen und bei einer nicht bestimmungsgemäßen Position bzw. Positionsänderung oder bei einem nicht erkannten Zubehörteil einen entsprechenden Nutzerhinweis auszugeben.

Durch das automatische Erkennen des Zubehörteils und seiner Position führt die Steuereinrichtung automatisch eine Bestätigung durch und informiert den Nutzer, falls die Position nicht diejenige ist, die in einer Zubereitungsanleitung vorgesehen ist. So erfolgt die Bestätigung sicher und mit einer geringeren Fehlerquote. Außerdem entfällt eine manuelle Nutzereingabe, was zu einem erhöhten Benutzungskomfort führt. Darüber hinaus wird der Zeitaufwand insgesamt verringert, denn die automatische Bestätigung ist in der Regel schneller durchgeführt als durch eine manuelle Eingabe bzw. Bestätigung.

Die erfindungsgemäße Lösung ist sowohl für das Durchführen eines Zubereitungsvorgangs mit digitalem, unterstütztem Kochen, als auch ohne Unterstützung vorteilhaft. So kann zum Beispiel ein Zubehörteil einfach am Grundgerät eingesetzt werden und seine bestimmungsgemäße Position automatisch bestätigt werden, so dass Funktionen des Küchenmaschinesystems, die aus Sicherheitsgründen ohne valide Bestätigung gesperrt sind, automatisch freigeschaltet werden. Sollte eine Zubereitungsanleitung ausgewählt worden sein, die zum Beispiel eine Bestätigung des Einsetzens eines bestimmten Zubehörteils erfordert, dann kann mit dem erfindungsgemäßen Küchenmaschinesystem ein derartiges, tatsächliches Einsetzen automatisch bestätigt und mit dem Zubereitungsvorgang gemäß der Zubereitungsanleitung einfach fortgeführt werden.

Ein Grundgerät im Sinne der vorliegenden Erfindung ist vorzugsweise als Basis für den Einsatz von Zubehörteilen ausgebildet, indem es eine Schnittstelle für ein Zusammenwirken mit mindestens einem Zubehörteil aufweist. Das Grundgerät weist ein Gehäuse auf, in dem ein Elektromotor zum Antrieb von Zubehörteilen angeordnet ist. Der Elektromotor wirkt dann mit einem am Grundgerät eingesetzten Zubehörteil über die Schnittstelle des Grundgeräts zusammen.

Als Zubehörteil wird jedes für ein Zusammenwirken mit dem Grundgerät ausgebildetes Teil verstanden. Das Zubehörteil kann mittelbar oder unmittelbar am Grundgerät einsetzbar sein, wobei für ein unmittelbares Einsetzen das Zubehörteil eine mit der Schnittstelle des Grundgeräts kompatible Schnittstelle aufweist, und wobei für ein unmittelbares Einsetzen das Zubehörteil an einem weiteren Zubehörteil angesetzt ist, das wiederum unmittelbar am Grundgerät eingesetzt ist. Der Begriff "Einsetzen" umfasst, unter anderem, die Handlungen aus der Liste: Verbinden, Koppeln, Montieren, Aufsetzen, Anbringen, Aufbringen und Ähnliches. Insbesondere ist ein Zubehörteil zur Erweiterung der Funktion des Grundgeräts ausgebildet, zum Beispiel als Schneide-, Rühr-, Koch-, Wiege-, Gar-, Dampf- oder Abdeckungseinheit. Die Funktion, für die das Zubehörteil vorgesehen ist, bezeichnet vorzugsweise den Zubehörteiltyp.

Der Begriff Identifikationsmerkmal umfasst jede Information über mindestens eine Eigenschaft des Zubehörteils. Vorzugsweise reicht das Identifikationsmerkmal aus, um ein Zubehörteil zu identifizieren bzw. im Kontext einer Datenbank zuordnen zu können. Ein Identifikationsmerkmal im Sinne der Erfindung kann aus der nicht abschließenden Liste ausgewählt sein: Zubehörteiltyp, wie zum Beispiel Schneide-, Rühr-, Koch-, Wiege-, Gar-, Dampf- oder Abdeckungseinheit; Herkunftsinformation, wie Herstelleridentität, Herstellungszeitpunkt, Herstellungsort; Authentifizierungsinformation; Identifikationsnummer, wie zum Beispiel eine Seriennummer oder einen Universally Unique Identifier (UUID). Vorzugsweise ist das Identifikationsmerkmal durch den Zubehörteilhersteller vor dem Vertrieb bzw. im Rahmen der Produktion vergeben worden.

Das Informationsmerkmal ist vorzugsweise auf einem Datenträger gespeichert, der in dem Grundkörper des Zubehörteils integriert oder am Grundkörper des Zubehörteils dauerhaft angebracht ist. Es können mehrere Datenträger vorgesehen sein, die jeweils ein Identifikationsmerkmal tragen, und die an unterschiedlichen Positionen am Zubehörteil angeordnet sind. So kann je nach Einsatzposition bzw. Richtung, in der das Zubehörteil am Grundgerät eingesetzt ist, ein der Einsatzposition entsprechendes Identifikationsmerkmal erfasst werden. Alternativ oder zusätzlich kann ein Datenträger mehrere Identifikationsmerkmale aufweisen, die jeweils in Abhängigkeit von der Einsatzposition des Zubehörteils am Grundkörper erfasst werden. Insbesondere kann ein Datenträger umschaltbar, zum Beispiel mithilfe eines Magnets, sein und in Abhängigkeit von der Schaltposition bzw. von dem Schaltzustand ein entsprechendes Identifikationsmerkmal zur Erfassung bereitstellen. Somit kann für ein Zubehörteil, das mehrere Einsatzpositionen am Grundgerät annehmen kann, ein passender Schnellstartmodus in Abhängigkeit von seiner aktuellen Einsatzposition automatisch aufgerufen werden.

Die Erfassungseinrichtung ist dazu eingerichtet, das Identifikationsmerkmal des Zubehörteils zu erfassen. Ist zum Beispiel das Identifikationsmerkmal in Form eines QR-Codes am Zubehörteil angebracht, so ist die Erfassungseinrichtung vorzugsweise als optischer Leser ausgebildet. Die Erfassungseinrichtung kann auch ein Leser für einen an eine RFID-Antenne verbundenen Datenspeicher, ein Teil eines Nahfunk-Systems (z.B. Bluetooth, Ultra-Wide-Band (UWB) oder WLAN) oder ein Teil eines Bussystems sein. Die Erfassungseinrichtung kann am Grundkörper angeordnet sein oder als vom Grundkörper und vom Zubehörteil separates Gerät ausgebildet sein, zum Beispiel als Smartphone mit einem Erfassungselement wie eine integrierte Kamera, das über die Kommunikationsschnittstelle mit der Steuereinrichtung des Grundgeräts für einen Datenaustauschdirekt oder indirekt verbunden ist.

Außerdem kann die Erfassungseinrichtung über eine Kommunikationsverbindung mit einem Erfassungselement verbindbar sein, das an einem ersten Zubehörteil angeordnet ist. Das Erfassungselement ist vorzugsweise dazu eingerichtet, ein Identifikationsmerkmal eines weiteren Zubehörteils zu erfassen. Auf diese Art kann das weitere Zubehörteil erst erkannt und dann für eine bestimmungsgemäße Benutzung am Grundgerät oder am ersten Zubehörteil eingesetzt werden. Dies ist für Zubehörteile, deren Identifikationsmerkmal sich in der bestimmungsgemäßen Einsatzposition nur schwierig erfassen lässt, insbesondere aufgrund einer zu niedrigen Signalübermittlung durch den Boden eines als Kocheinheit ausgebildeten ersten Zubehörteils, besonders vorteilhaft.

Die Position eines Zubehörteils im Sinne der vorliegenden Erfindung ist in Bezug auf das Grundgerät und / oder in Bezug auf ein weiteres Zubehörteil definiert. So kann eine Position eines Zubehörteils ein Abstand zu einem Referenzpunkt am Grundgerät oder an einem weiteren Zubehörteil, ein Verbindungszustand von miteinander kompatiblen Schnittstellen oder Ähnliches sein. Ist ein Zubehörteil direkt am Grundgerät montiert, zum Beispiel durch Verbinden einer Schnittstelle des Zubehörteils mit einer Schnittstelle des Grundgeräts, dann ist das Zubehörteil am Grundgerät unmittelbar eingesetzt. Ein weiteres Beispiel für eine Position im Sinne der vorliegenden Erfindung ist ein Zustand, in dem ein erstes Zubehörteil an einem weiteren Zubehörteil angebracht hinzugefügt ist, wobei das weitere Zubehörteil am Grundgerät eingesetzt oder aufgesetzt ist. Hier sind das erste Zubehörteil mittelbar und das weitere Zubehörteil unmittelbar am Grundgerät eingesetzt. Ein Zubehörteil kann auch zum Beispiel in einer Position sein, in dem es vom Grundgerät entfernt oder am Grundgerät falsch eingesetzt ist. Auch ein Fehlen bzw. die Abwesenheit eines Zubehörteils wird als Position des betroffenen Zubehörteils verstanden.

Eine bestimmungsgemäße Position im Sinne der Erfindung kann insbesondere ein Zustand sein, der ein für die Funktion des betroffenen Zubehörteils vorgesehenes Zusammenwirken mit dem Grundgerät erlaubt. So kann zum Beispiel eine bestimmungsgemäße Position für ein Zubehörteil, das für ein unmittelbares Einsetzen am Grundgerät vorgesehen ist, ein Zustand sein, in dem jeweilige, miteinander kompatible Schnittstellen des Zubehörteils und des Grundgeräts für einen Antrieb durch den Elektromotor oder eine Steuerung eines Heizelements des Zubehörteils verbunden sind.

Die Position eines Zubehörteils ist eine durch die Positionserfassungseinrichtung erfasste, reale Position. Daneben ist vorzugsweise eine bestimmungsgemäße Position im Vorfeld definiert und als maschinenlesbare Information auf einem Speichermedium hinterlegt, auf das die Steuereinrichtung zugreifen kann, um ein Vergleich mit der erfassten Position durchzuführen und somit auch zu ermitteln, ob die erfasste Position mit der vorgesehenen, bestimmungsgemäßen Position übereinstimmt. Vorzugsweise ist die maschinenlesbare Information zur bestimmungsgemäßen Position im Kontext einer Zubereitungsanleitung für einen Zubereitungsvorgang hinterlegt.

Als "Positionsänderung" wird vorliegen ein Unterschied zwischen einer bei einem ersten Zeitpunkt erfassten Position und einer bei einem weiteren, späteren Zeitpunkt erfassten Position verstanden. So kann zum Beispiel ein erster Erfassungsvorgang die Abwesenheit eines Zubehörteils ergeben bzw. eine Position eines Zubehörteils als "entfernt" ermittelt werden, und ein weiterer, bei einem späteren Zeitpunkt durchgeführter Erfassungsvorgang ein Einsatz des Zubehörteils am Grundgerät bzw. eine Position als " eingesetzt" ermittelt werden, wobei der Begriff "eingesetzt" insbesondere die Positionen aus der nicht abschließenden Liste umfasst: verbunden, gekoppelt, montiert, aufgesetzt, angebracht, aufgebracht, und Ähnliches. Insgesamt ist die entsprechende Positionsänderung ein Einsetzen des Zubehörteils am Grundgerät. Wird zunächst eine Position als "eingesetzt" und später ein Position "entfernt" ermittelt, dann ist die sich daraus ergebende Positionsänderung ein Entfernen. Auch ein Unterschied zwischen einer falsch bzw. nicht bestimmungsgemäßen Position und einer bestimmungsgemäßen Position eine Positionsänderung.

Vorzugsweise sind im Vorfeld definierte, bestimmungsgemäße Positionsänderungen als maschinenlesbare Information auf einem Speichermedium hinterlegt, auf das die Steuereinrichtung zugreifen kann, um einen Vergleich mit der erfassten Positionsänderung durchzuführen und somit auch zu ermitteln, ob die erfasste Positionsänderung mit der vorgesehenen, bestimmungsgemäßen Positionsänderung übereinstimmt. Vorzugsweise ist die maschinenlesbare Information zur bestimmungsgemäßen Positionsänderung im Kontext einer Zubereitungsanleitung für einen Zubereitungsvorgang hinterlegt. So kann zum Beispiel eine Zubereitungsanleitung mit einem Identifikationsmerkmal für ein Zubehörteil und mit einer bestimmungsgemäßen Positionsänderung als "einsetzen" in der Datenbank hinterlegt sein.

Die zur Ermittlung der Position bzw. Positionsänderung des Zubehörteils vorgesehene Positionserfassungseinrichtung kann beispielsweise als dedizierte Einrichtung, die mit einem Element am Zubehörteil zusammenwirkt, und / oder als Wiegemodul ausgebildet sein. Alternativ oder zusätzlich kann die Erfassungseinrichtung zum Erfassen eines Identifikationsmerkmals als Positionserfassungseinrichtung fungieren, indem ein Einsetzen erkannt wird, wenn ein Identifikationsmerkmal in dem Erfassungsfeld der Erfassungseinrichtung eintritt, und ein Entfernen erkannt wird, wenn ein Identifikationsmerkmal in dem Erfassungsfeld der Erfassungseinrichtung austritt. Alternativ oder zusätzlich kann die Positionserfassungseinrichtung als vom Grundgerät und vom Zubehörteil separates Gerät ausgebildet sein und über die Kommunikationsschnittstelle mit der Steuereinrichtung verbindbar sein.

Die Positionserfassungseinrichtung kann im Zubehörteil und/oder im Gehäuse des Grundgeräts angeordnet sein. Vorzugsweise weist das Zubehörteil mindestens ein Element auf, das dazu eingerichtet ist, die Positionserfassungseinrichtung zu beeinflussen, und die Positionserfassungseinrichtung ist dazu eingerichtet, in Abhängigkeit von der Beeinflussung durch das Element eine Information mit einer Positionsinformation auszugeben.

Insbesondere kann das Zusammenwirken des Elements des Zubehörteils mit der Positionserfassungseinrichtung wie folgt ausgestaltet sein:
- Öffnen oder Schließen eines elektrischen Kontakts zwischen dem Element am Zubehörteil und der Positionserfassungseinrichtung durch Positionsänderung des Zubehörteils relativ zum Grundgerät;
- Öffnen oder Schließen eines magnetischen Kontakts, zum Beispiel ein Reed-Kontakt, zwischen einem als Magnet ausgebildeten Element am Zubehörteil und der Positionserfassungseinrichtung durch Positionsänderung des Zubehörteils relativ zum Grundgerät;
- Erfassen einer durch Zusammenwirken eines Metallteils am Zubehörteil und eines aktiven Erfassungselements der Positionserfassungseinrichtung herbeigeführten Induktivitäts- oder Kapazitätsänderung; und / oder
- Erfassen der Intensität des Magnetfeldes eines am Zubehörteil angeordneten Magnets durch ein aktives Erfassungselement der Positionserfassungseinrichtung.

Weiterhin ist die Steuereinrichtung vorzugsweise in dem Gehäuse oder am Gehäuse des Grundgeräts angeordnet und weist vorzugsweise einen Prozessor mit einem Speichermedium auf. Insbesondere kann ein Computerprogramm mit Befehlen auf dem Speichermedium gespeichert sein, deren Ausführung durch den Prozessor die Durchführung eines Betriebsverfahrens durch das Küchenmaschinesystem bewirkt.

Auf dem Speichermedium kann eine Datenbank mit Identifikationsmerkmalen, Zubereitungsanleitungen, Zubereitungsanweisungen und / oder maschinenlesbare Informationen betreffend bestimmungsgemäße Positionen für Zubehörteile gespeichert sein.

Vorzugsweise ist auf dem Speichermedium der Steuereinrichtung eine derartige Datenbank hinterlegt, dass im Betrieb auf einen Zugriff auf eine externe Informationsquelle bzw. auf eine externe Datenbank verzichtet werden kann. Das Küchenmaschinesystem, insbesondere die Steuereinrichtung, kann derart eingerichtet sein, dass die Steuereinrichtung auf eine externe Datenbank zugreift, wenn die in der Datenbank auf dem Speichermedium der Datenbank hinterlegten Informationen nicht ausreichend sind. So kann zum Beispiel beim ersten Einsatz eines Zubehörteils die Steuereinrichtung auf eine externe Datenbank zugreifen, um Zubereitungsanleitungen, Identifikationsmerkmale und / oder vordefinierte bestimmungsgemäße Positionen für dieses Zubehörteil auf ihr Speichermedium herunterzuladen. Außerdem ist die Steuereinrichtung vorzugsweise für einen Zugriff über Internet mit einem externen Server, zum Beispiel einem Server des Herstellers des Küchenmaschinesystems, verbindbar.

Vorzugsweise steht die Steuereinrichtung für Datenaustausche jeweils mit der Erfassungseinrichtung und mit der Positionserfassungseinrichtung in Verbindung. Hierzu können drahtlose oder kabelgebundenen Kommunikationsverbindungen zwischen den jeweiligen Einrichtungen vorgesehen sein.

Die Steuereinrichtung ist dazu eingerichtet, auf Basis der durch die Erfassungseinrichtung und durch die Positionserfassungseinrichtung weitergeleiteten Informationen ein Zubehörteil und seine Position zu erkennen. Hierzu ist die Steuereinrichtung vorzugsweise dazu eingerichtet, die Informationen aus den weitergeleiteten bzw. empfangenen Informationen jeweils mit Identifikationsmerkmalen und im Vorfeld definierten, bestimmungsgemäßen Positionen aus einer Datenbank zu vergleichen. Aus dem Vergleichsergebnis ist dann die Steuereinrichtung in der Lage zu bestimmen, ob ein Zubehörteil aus der Datenbank bereits bekannt bzw. registriert ist, und ob seine erfasste Position einer für dieses Zubehörteil vorgesehenen, bestimmungsgemäßen Position entspricht.

Weiterhin ist die Steuereinrichtung dazu eingerichtet, eine bestimmungsgemäße Position oder Positionsänderung eines erkannten Zubehörteils automatisch zu bestätigen. So erfolgt die Bestätigung von und für die Steuereinrichtung, das heißt vorzugsweise ohne manuelle Eingabe. Insbesondere kann im Kontext einer Zubereitungsanleitung mit mehreren aneinander folgenden Zubereitungsschritten, wobei ein erster Zubereitungsschritt daran besteht, ein bestimmtes Zubehörteil einzusetzen, der erste Zubereitungsschritt durch die Bestätigung automatisch abgeschlossen und der nächste Zubereitungsschritt angeleitet werden.

Im Einklang mit der internen Bestätigung kann die Steuereinrichtung einen Nutzerhinweis ausgeben, dass das richtige Zubehörteil bestimmungsgemäß positioniert ist. Alternativ kann von einem Nutzerhinweis betreffend einer erfolgreichen, automatischen Bestätigung abgesehen werden oder die Zur-Verfügung-Stellung eines solchen Nutzerhinweises zeitlich verkürzt sein.

Des Weiteren ist die Steuereinrichtung dazu eingerichtet, bei einer nicht bestimmungsgemäßen Position bzw. Positionsänderung oder bei einem nicht erkannten Zubehörteil einen entsprechenden Nutzerhinweis auszugeben. Der Fall eines nicht erkannten Zubehörteils ist insbesondere gegeben, wenn ein durch die Steuereinrichtung durchgeführter Vergleich eines erfassten Identifikationsmerkmals mit Identifikationsmerkmalen aus einer Datenbank keine Übereinstimmung ergibt. Daneben ist der Fall einer nicht bestimmungsgemäßen Position insbesondere gegeben, wenn die erfasste Position mit keiner vorgegebenen, in einer Datenbank hinterlegten, bestimmungsgemäßen Position übereinstimmt.

Gemäß einer ersten Ausführungsform des Küchenmaschinesystems ist die Steuereinrichtung dazu eingerichtet, Bestandteile des Küchenmaschinesystems entsprechend mindestens eines vorbestimmten Zubereitungsvorgangs zu steuern und den Ablauf eines Zubereitungsvorgangs in Abhängigkeit von der erfassten Position bzw. Positionsänderung und von dem erfassten Identifikationsmerkmal automatisch anzupassen.

Dadurch kann im Rahmen eines digitalen unterstützen Zubereitungsvorgangs, zum Beispiel durch Ausgeben von Anweisungen entsprechend einer digital hinterlegten, durch einen Nutzer ausgewählten Zubereitungsanleitung, das Grundgerät in Abhängigkeit von der Position eines erkannten Zubehörteils automatisch gesteuert und auf eine manuelle Nutzereingabe zur Bestätigung des Einsatzes des Zubehörteils verzichtet werden.

Der Ablauf eines Zubereitungsvorgangs kann zum Beispiel dadurch angepasst werden, dass der Elektromotor des Grundgeräts gestartet wird, wenn das Einsetzen einer Rühreinheit erkannt wird, oder dass ein Wiegemodul aktiviert wird, wenn das Einsetzen eines Kochgefäßes mit Inhalt ermittelt wird. Weitere Beispiele sind ein Einstellen einer Drehrichtung für den Elektromotor, ein Einstellen eines Drehmoments für den Elektromotor, ein Aktivieren und / oder Einstellen einer Steuerung für ein Heizelement.

Sollte hingegen ein erwartetes bzw. gemäß der aktuell ausgewählten Zubereitungsanleitung empfohlenes Zubehörteil fehlen, kann eine Wartezeit gestartet werden und die Steuereinrichtung einen Erfassungsvorgang nach Ablauf der Wartezeit durchführen, so dass dem Nutzer Zeit gegeben wird, das Zubehörteil in die erwartete Position zu bringen.

Gemäß einer weiteren Ausführungsform des Küchenmaschinesystems ist die Steuereinrichtung dazu eingerichtet, Anweisungen für Zubereitungsschritte mindestens eines Zubereitungsvorgangs über die Kommunikationsschnittstelle in Abhängigkeit von der erfassten Position bzw. Positionsänderung und von dem erfassten Identifikationsmerkmal automatisch zur Verfügung zu stellen.

Dadurch können Anweisungen ausgegeben werden, die für den aktuellen Zustand des Küchenmaschinesystems angemessen sind und somit auch der Nutzer für die Durchführung eines Zubereitungsvorgangs besser unterstützt werden.

Insbesondere kann die Steuereinrichtung dazu eingerichtet sein, eine Zur-Verfügung-Stellung einer Anweisung betreffend ein Einsetzen oder ein Entfernen eines Zubehörteils zu beenden, wenn eine entsprechende bestimmungsgemäße Positionsänderung des Zubehörteils erkannt wird, und gegebenenfalls eine Anweisung für einen anschließenden Zubereitungsschritt zur Verfügung stellen.

Die vorgesehene Kommunikationsschnittstelle kann vorliegend eine Benutzerschnittelle in Form einer akustischen, haptischen oder optischen Anzeige, aber auch eine Schnittstelle zum Weiterleiten von Informationen an ein Nutzerendgerät wie zum Beispiel ein Smartphone oder ein digitales Hausverwaltungssystem sein. So stellt die Kommunikationsschnittstelle Informationen unmittelbar, das heißt zum Beispiel selbst als Display, oder mittelbar über eine zusätzliche Nutzerschnittstelle zur Verfügung.

Gemäß einer weiteren Ausführungsform des Küchenmaschinesystems ist für die Durchführung eines Zubereitungsschrittes ein Einsetzen oder ein Entfernen mindestens eines Zubehörteils empfohlen und die Steuereinrichtung ist dazu eingerichtet, beim Erkennen eines entsprechenden, bestimmungsgemäßen Einsetzens oder Entfernens des mindestens einen empfohlenen Zubehörteils dies automatisch zu bestätigen und den entsprechenden Zubereitungsschritt abzuschließen bzw. eine Anweisung für einen anschießenden Zubereitungsschritt zur Verfügung zu stellen.

Somit ist das Küchenmaschinesystem in der Lage, Zubereitungsschritte eines Zubereitungsvorgangs entsprechend einer Zubereitungsanleitung und unter Berücksichtigung der erfassten Informationen selbstständig zu verwalten. So entfällt nicht nur eine Nutzereingabe bezüglich einer Bestätigung eines richtig positionierten Zubehörteils, sondern auch eine Nutzereingabe bezüglich des Fortführens des Zubereitungsvorgangs.

Alternativ oder zusätzlich kann die Steuereinrichtung eine Anweisung für einen Zubereitungsschritt erneut zur Verfügung stellen, zum Beispiel wenn ein verfrühtes Entfernen eines Zubehörteils erkannt wird.

Gemäß einer weiteren Ausführungsform des Küchenmaschinesystems ist die Steuereinrichtung dazu eingerichtet, beim Erkennen eines nicht bestimmungsgemäßen Einsetzens oder eines nicht bestimmungsgemäßen Entfernens bei einem ersten Erfassungsvorgang einen erneuten Erfassungsvorgang nach Ablauf einer vorbestimmten Zeitdauer durchzuführen, und beim Erkennen eines nicht bestimmungsgemäßen Einsetzens oder eines nicht bestimmungsgemäßen Entfernens bei dem erneuten Erfassungsvorgang einen entsprechenden Nutzerhinweis zur Verfügung zu stellen und ein Fortführen eines Zubereitungsschritts am Küchenmaschinesystem zu unterbinden.

Dadurch kann neben dem Hinweis auf eine nicht bestimmungsgemäße Position des Zubehörteils auch dem Nutzer die Gelegenheit gegeben werden, die unrichtige Position zu korrigieren, um dann den Zubereitungsvorgang fortzuführen. Darüber hinaus kann beim Erkennen einer falschen Position selbst nach Ablauf der vorbestimmten Zeitdauer eine Beschädigung des Küchenmaschinesystems aufgrund der falschen Position vermieden werden.

Gemäß einer weiteren Ausführungsform des Küchenmaschinesystems ist für die Durchführung eines Zubereitungsschrittes ein Einsetzen mindestens eines Zubehörteils empfohlen und die Steuereinrichtung ist dazu eingerichtet, beim Erkennen der Abwesenheit des mindestens einen empfohlenen Zubehörteils bei einem ersten Erfassungsvorgang automatisch einen entsprechenden Nutzerhinweis zur Verfügung zu stellen und nach Ablauf einer vorbestimmten Zeitdauer einen erneuten Erfassungsvorgang durchzuführen.

Somit wird beim Fehlen eines Zubehörteils dem Nutzer die Gelegenheit gegeben, das Zubehörteil einzusetzen. Ergibt der weitere Erfassungsvorgang ein Erkennen eines bestimmungsgemäßen Einsetzens des empfohlenen Zubehörteils, so kann dieses automatisch bestätigt werden und mit dem Zubereitungsvorgang fortgeführt werden.

Gemäß einer weiteren Ausführungsform des Küchenmaschinesystems ist für die Durchführung eines Zubereitungsschrittes ein Einsetzen mindestens eines Zubehörteils erforderlich und die Steuereinrichtung ist dazu eingerichtet, beim Erkennen der Abwesenheit des mindestens einen erforderlichen Zubehörteils einen entsprechenden Nutzerhinweis automatisch zur Verfügung zu stellen und ein Fortführen eines Zubereitungsschritts am Küchenmaschinesystem zu unterbinden, bis ein bestimmungsgemäßes Einsetzen des erforderlichen Zubehörteils erkannt wird.

Dies steigert die Sicherheit des Küchensystems nicht nur für den Nutzer, sondern auch in Bezug auf Materialschädigungen, die beim fehlenden Einsatz eines erforderlichen Zubehörteils auftreten können.

Im Kontext einer Zubereitungsanleitung, entsprechende deren ein Zubereitungsvorgang durchgeführt wird, kann zum Beispiel definiert sein, dass beim Einsatz einer Schneideeinheit auch eine Abdeckung erforderlich ist. Werden gleichzeitig ein Einsatz einer Schneideeinheit und eine Abwesenheit einer Abdeckung durch die Steuereinrichtung festgestellt, dann kann diese den Antrieb der Schneideeinheit durch den Elektromotor unterbinden, bis der Einsatz der erforderlichen Abdeckung festgestellt wird.

Gemäß einer weiteren Ausführungsform des Küchenmaschinesystems liegt eine Zubereitungsanleitung mit einer Reihenfolge von Zubereitungsschritten mit entsprechenden Anweisungen vor und die Steuereinrichtung ist dazu eingerichtet, eine Zur-Verfügung-Stellung einer Anweisung betreffend ein Einsetzen oder ein Entfernen eines Zubehörteils zu überspringen, wenn eine entsprechende bestimmungsgemäße Positionsänderung des Zubehörteils zeitlich bereits vor der Zur-Verfügung-Stellung dieser Anweisung erkannt wurde, und / oder wenn eine entsprechende bestimmungsgemäße Position erkannt wird.

Durch korrektes Einsetzen oder Entfernen eines zutreffenden Zubehörteils vor Anzeige einer entsprechenden Anweisung wird diese Anweisung gegebenenfalls überflüssig. Mit dem angegebenen Küchenmaschinesystem kann eine Zur-Verfügung-Stellung derartiger Anweisungen unterbunden und somit auch insgesamt die Nutzerfreundlichkeit gesteigert werden. Auch wenn ein empfohlenes Zubehörteil bereits vorliegt, dann kann die überflüssige Aufforderung, dieses einzusetzen, unterbunden werden.

Vorzugsweise liegt eine Zubereitungsanleitung mit einer vorgelegten zeitlichen Reihenfolge von Anweisungen vor, wobei mindestens eine der Anweisungen das Einsetzen oder Entfernen eines Zubehörteils betrifft.

Die oben genannte Aufgabe ist auch durch ein Verfahren zur Steuerung eines Küchenmaschinesystems, insbesondere eines Küchenmaschinesystems nach einem der erläuterten Ausführungsformen, bei dem ein Identifikationsmerkmal mindestens eines Zubehörteils erfasst wird, bei dem die Position des mindestens einen Zubehörteils in Bezug auf das Grundgerät und / oder in Bezug auf ein weiteres Zubehörteil erfasst wird, bei dem auf Basis des erfassten Identifikationsmerkmals und der erfassten Position ein Zubehörteil und seine Position erkannt werden, und bei dem eine bestimmungsgemäße Position oder Positionsänderung eines erkannten Zubehörteils automatisch bestätigt wird und im Fall einer nicht bestimmungsgemäßen Position bzw. Positionsänderung oder im Fall eines nicht erkannten Zubehörteils ein entsprechender Nutzerhinweis ausgegeben wird.

Das Verfahren und die im Folgenden erläuterten Ausführungsbeispiele des Verfahrens haben die gleichen Vorteile wie die entsprechenden Ausführungsformen des Küchenmaschinesystems.

Bei dem erfindungsgemäßen Verfahren können die Arbeitsschritte eines Erfassens eines Identifikationsmerkmals und eines Erfassens einer Position bzw. Positionsänderung nacheinander in dieser Reihenfolge, nacheinander in umgekehrter Reihenfolge oder zeitlich parallel erfolgen.

Eine Identifizierung eines Zubehörteils durch die Steuereinrichtung erfolgt vorzugsweise durch Vergleich des erfassten Identifikationsmerkmals mit Identifikationsmerkmalen aus einer Datenbank, wobei ein Zubehörteil als erkannt gilt, wenn das erfasste Identifikationsmerkmal mit mindestens einem Identifikationsmerkmal aus der Datenbank übereinstimmt. Sollte der Vergleich keine Übereinstimmung ergeben, dann gilt das Zubehörteil als nicht erkannt. In diesem Fall besteht vorzugsweise die Möglichkeit, das Zubehörteil durch manuelle Eingabe oder durch Hinterlegen eines entsprechenden Computerprogrammcodes automatisch zu registrieren, in dem das erfasste Identifikationsmerkmal in der Datenbank für spätere Einsätze des Zubehörteils am Grundgerät gespeichert wird.

In ähnlicher Weise wird eine bestimmungsgemäße Position eines erkannten Zubehörteils erkannt, in dem die erfasste Position mit mindestens einer spezifisch für das Zubehörteil vordefinierten und in der Datenbank mit dem Identifikationsmerkmal des Zubehörteils verknüpften, bestimmungsgemäßen Position verglichen wird. Dies gilt auch für das Erkennen einer Positionsänderung des Zubehörteils. So kann zum Beispiel eine bestimmungsgemäße Position für eine Abdeckungseinheit ein korrektes Einsetzen auf einem passenden Kochgefäß sein. Ein weiteres Beispiel für eine bestimmungsgemäße Position eines Zubehörteils ist eine korrekte Platzierung einer Schneideeinheit auf einer Antriebsachse in einem Kochgefäß.

Der Identifizierungsvorgang, bei dem ein Identifikationsmerkmal erfasst und mit Identifikationsmerkmalen aus einer Datenbank verglichen wird, und der Positionserkennungsvorgang, bei dem eine Position bzw. Positionsänderung erfasst und mit Positionen bzw. Positionsänderungen aus der Datenbank verglichen wird, werden vorzugsweise nacheinander durchgeführt. Indem in der Datenbank eine bestimmungsgemäße Position mit jedem Identifikationsmerkmal verknüpft und hinterlegt ist, kann durch den Ablauf mit erst einem Identifizierungsvorgang und dann einem Positionserkennungsvorgang eine bestimmungsgemäße Position bzw. Positionsänderung einfacher erkannt werden.

Alternativ kann die Reihenfolge der Identifizierungs- und Positionserkennungsvorgänge ausgetauscht werden, wobei eine positive Übereinstimmung einer erfassten Information des zuerst durchgeführten Vorgangs zur Durchführung des nächstens Vorgangs führt.

Gemäß einem ersten Ausführungsbeispiel des Verfahrens werden Bestandteile des Küchenmaschinesystems entsprechend mindestens eines vorbestimmten Zubereitungsvorgangs gesteuert, wobei der Ablauf eines Zubereitungsvorgangs in Abhängigkeit von der erfassten Position bzw. Positionsänderung und von dem erfassten Identifikationsmerkmal automatisch angepasst wird.

Gemäß einem weiteren Ausführungsbeispiel des Verfahrens werden Anweisungen für Zubereitungsschritte mindestens eines Zubereitungsvorgangs über die Kommunikationsschnittstelle in Abhängigkeit von der erfassten Position bzw. Positionsänderung und von dem erfassten Identifikationsmerkmal automatisch zur Verfügung gestellt, insbesondere wird eine Zur-Verfügung-Stellung einer Anweisung betreffend ein Einsetzen oder ein Entfernen eines Zubehörteils übersprungen, wenn eine entsprechende bestimmungsgemäße Position bzw. Positionsänderung des Zubehörteils zeitlich bereits vor der Zur-Verfügung-Stellung dieser Anweisung erkannt wurde.

Gemäß einem weiteren Ausführungsbeispiel des Verfahrens ist für die Durchführung eines Zubereitungsschrittes ein Einsetzen oder ein Entfernen mindestens eines Zubehörteils empfohlen und beim Erkennen eines entsprechenden, bestimmungsgemäßen Einsetzens oder eines entsprechenden, bestimmungsgemäßen Entfernens des mindestens einen empfohlenen Zubehörteils wird dies automatisch bestätigt und der entsprechende Zubereitungsschritt abgeschossen bzw. eine Anweisung für einen anschießenden Zubereitungsschritt zur Verfügung gestellt.

Gemäß einem weiteren Ausführungsbeispiel des Verfahrens wird beim Erkennen eines nicht bestimmungsgemäßen Einsetzens oder eines nicht bestimmungsgemäßen Entfernens bei einem ersten Erfassungsvorgang ein erneuter Erfassungsvorgang nach Ablauf einer vorbestimmten Zeitdauer durchgeführt und beim Erkennen eines nicht bestimmungsgemäßen Einsetzens oder eines nicht bestimmungsgemäßen Entfernens bei dem erneuten Erfassungsvorgang werden ein entsprechender Nutzerhinweis zur Verfügung gestellt und ein Fortführen eines Zubereitungsschritts am Küchenmaschinesystem unterbunden.

Gemäß einem weiteren Ausführungsbeispiel des Verfahrens ist für die Durchführung eines Zubereitungsschrittes ein Einsetzen mindestens eines Zubehörteils empfohlen und beim Erkennen der Abwesenheit des mindestens einen empfohlenen Zubehörteils bei einem ersten Erfassungsvorgang wird ein entsprechender Nutzerhinweis automatisch zur Verfügung gestellt und nach Ablauf einer vorbestimmten Zeitdauer ein erneuter Erfassungsvorgang durchgeführt. Alternativ ist für die Durchführung eines Zubereitungsschrittes ein Einsetzen mindestens eines Zubehörteils erforderlich und beim Erkennen der Abwesenheit des mindestens einen erforderlichen Zubehörteils werden ein entsprechender Nutzerhinweis automatisch zur Verfügung gestellt und ein Fortführen eines Zubereitungsschritts am Küchenmaschinesystem unterbunden, bis ein bestimmungsgemäßes Einsetzen des erforderlichen Zubehörteils erkannt wird.

Die oben genannte Aufgabe wird auch durch ein Steuerungssystem zur Steuerung eines Küchenmaschinesystems, insbesondere eines Küchenmaschinesystems nach einem der erläuterten Ausführungsformen, gemäß einem Verfahren nach einem der erläuterten Ausführungsbeispiele gelöst.

Auch dieses Steuerungssystem hat die gleichen Vorteile wie das Küchenmaschinesystem und seine Ausführungsformen.

Ferner ist die oben genannte Aufgabe durch ein Computerprogramm aufweisend Befehle gelöst, deren Ausführung auf mindestens einem Prozessor einer Steuereinrichtung eines Küchenmaschinesystems nach einer der oben beschriebenen Ausführungsformen die Durchführung eines Verfahrens gemäß einem oben erläuterten Ausführungsbeispiel bewirkt.

Weitere Merkmale und Vorteile der vorliegenden Erfindung ergeben sich aus der nachfolgenden Beschreibung von Ausführungsbeispielen, wobei auf die beigefügte Zeichnung Bezug genommen wird.

In der Zeichnung zeigen
- Fig. 1: eine Ausführungsform eines Küchenmaschinesystems in einer ersten Fallkonstellation,
- Fig. 2: das Küchenmaschinesystem der Fig. 1 in einer weiteren Fallkonstellation,
- Fig. 3: das Küchenmaschinesystem der Fig. 1 in einer weiteren Fallkonstellation und
- Fig. 4: ein Ausführungsbeispiel für ein Verfahren zur Steuerung eines Küchenmaschinesystems.

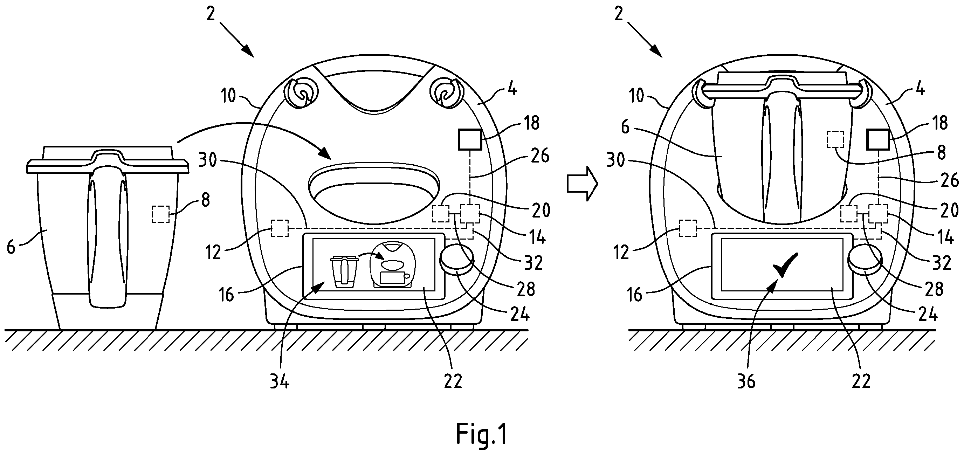

Fig. 1 zeigt ein Küchenmaschinesystem 2 in einer ersten Ausführungsform mit einem Grundgerät 4 und mit einem Zubehörteil 6. Das Zubehörteil 6 ist als Kochgefäß ausgebildet und weist ein RFID Modul 8 mit einem Identifikationsmerkmal auf. Das Grundgerät 4 weist ein Gehäuse 10, einen Elektromotor 12 zum Antrieb eines Funktionsteils eines Zubehörteils 6, eine Steuereinrichtung 14 und eine Kommunikationsschnittstelle 16 auf.

Am Grundgerät 4 sind ferner eine Erfassungseinrichtung 18 und eine Positionserfassungseinrichtung 20 vorgesehen, die jeweils zum Erfassen des Identifikationsmerkmals des Zubehörteils 6 und der Position bzw. einer Positionsänderung des Zubehörteils 6 eingerichtet sind. Hier ist die Erfassungseinrichtung 18 als RFID-Leser ausgebildet.

Die Positionserfassungseinrichtung 20 ist zum Zusammenwirken mit einem entsprechenden Element (nicht gezeigt) am Zubehörteil 6 ausgebildet. Dementsprechend ist die Positionserfassungseinrichtung 20 in der Lage, ein korrektes Einsetzen oder Entfernen bzw. ein fehlerhaftes Einsetzen oder Entfernen des Zubehörteils 6 am Grundgerät 4 zu erfassen.

Die Kommunikationsschnittstelle 16 ist als berührungsempfindlicher Bildschirm 22 mit einem Multifunktionsknopf 24 ausgebildet.

Die Erfassungseinrichtung 18, die Positionserfassungseinrichtung 20, der Elektromotor 12 und die Kommunikationsschnittstelle 16 sind jeweils durch eine Kommunikationsverbindung 26, 28, 30, 32 mit der Steuereinrichtung 14 verbunden.

In der dargestellten Fallkonstellation ist das Zubehörteil 6 zunächst vom Grundgerät 4 entfernt (linker Teil der Fig. 1) und dann am Grundgerät 4 eingesetzt (rechter Teil der Fig. 1). In der vom Grundgerät 4 entfernten Position des Zubehörteils 6 zeigt die Kommunikationsschnittstelle 16 eine Anweisung 34 an, das Zubehörteil 6 am Grundgerät 4 einzusetzen. Nach Einsetzen des Zubehörteils 6 wurde das Identifikationsmerkmal des Zubehörteils 6 durch die Erfassungseinrichtung 18 erfasst und durch die Steuereinrichtung 14 erkannt und daneben auch die Position des Zubehörteils 6 durch die Positionserfassungseinrichtung 20 erfasst und durch die Steuereinrichtung 14 als bestimmungsgemäße Position erkannt. Anschließend hat die Steuerungseinrichtung das bestimmungsgemäße Einsetzen des richtigen Zubehörteils 6 selbstständig und automatisch bestätigt und auch die Kommunikationsschnittstelle 16 veranlasst, einen entsprechenden Nutzerhinweis 36 anzuzeigen.

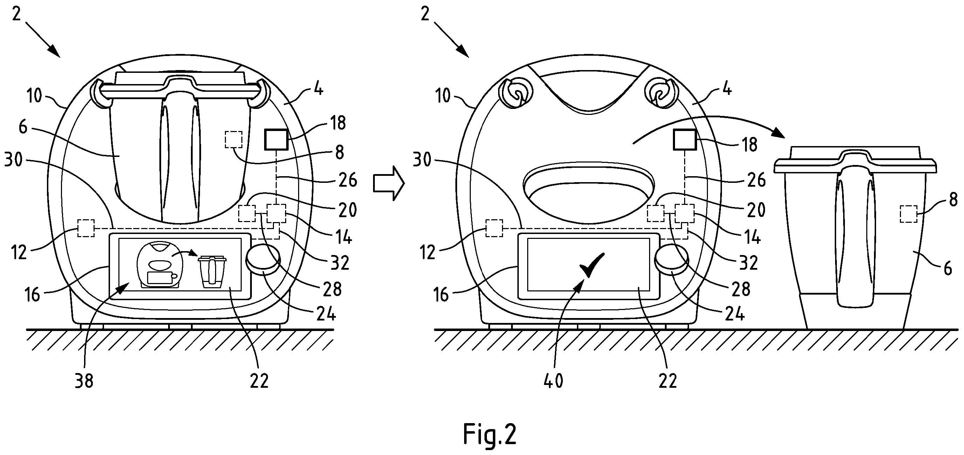

Das durch die Fig. 2 gezeigte Küchenmaschinesystem 2 ist dasselbe wie in der Fig. 1 mit dem Unterschied, dass die Fallkonstellation, bei der das Zubehörteil 6 vom Grundgerät 4 bestimmungsgemäß entfernt wird, dargestellt ist.

In dem linken Teil der Fig. 2 zeigt die Kommunikationsschnittstelle 16 eine Anweisung 38 an, das Zubehörteil 6 vom Grundgerät 4 zu entfernen. Zur Folge des Entfernens des Zubehörteils 6 durch den Nutzer, Erfassen des Identifikationsmerkmals des Zubehörteils 6 durch die Erfassungseinrichtung 18 und entsprechendes Erkennen durch die Steuereinrichtung 14 und auch Erfassen einer Positionsänderung durch die Positionserfassungseinrichtung 20 und entsprechendes Erkennen der Positionsänderung als Entfernen durch die Steuereinrichtung 14, hat die Steuereinrichtung 14 das bestimmungsgemäße Entfernen des richtigen Zubehörteils 6 selbstständig und automatisch bestätigt und die Kommunikationsschnittstelle 16 veranlasst, einen entsprechenden Nutzerhinweis 40 anzuzeigen.

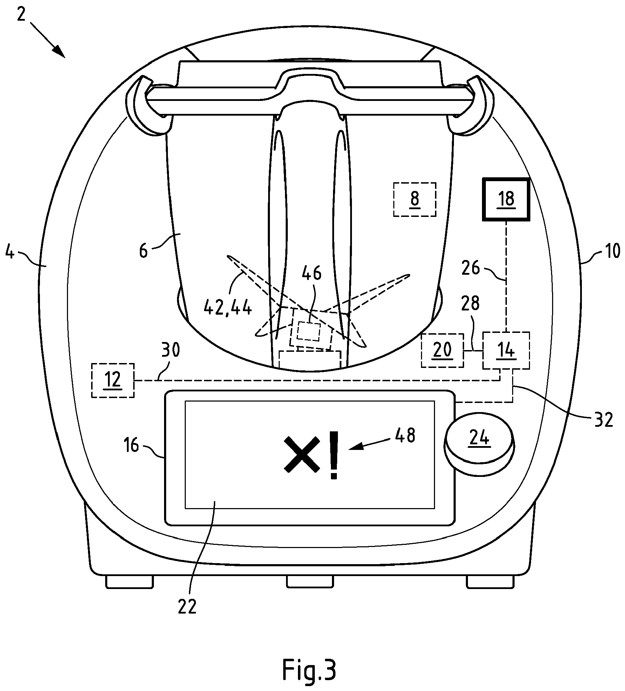

Die Fig. 3 zeigt das Küchenmaschinesystem 2 der Fig. 1, wobei ein zusätzliches, zweites Zubehörteil 42 in Form einer Schneideeinheit 44 mit einem ein Identifikationsmerkmal aufweisenden RFID-Modul 46 vorgesehen ist.

Die Positionserfassungseinrichtung 20 ist auch zum Zusammenwirken mit einem entsprechenden Element (nicht gezeigt) am zweiten Zubehörteil 42 ausgebildet und somit zum Erfassen eines korrekten Einsetzens oder Entfernens bzw. eines fehlerhaften Einsetzens oder Entfernens des zweiten Zubehörteils 42 im ersten Zubehörteil 6 eingerichtet.

In der dargestellten Konstellation ist das zweite Zubehörteil 42 nicht richtig eingesetzt bzw. seine Position ermöglicht kein bestimmungsgemäßes Zusammenwirken mit dem Elektromotor 12 des Grundgeräts 4. Nach Erfassen des Identifikationsmerkmals des zweiten Zubehörteils 42 durch die Positionserfassungseinrichtung 20 und entsprechendem Erkennen des Zubehörteils 42 durch die Steuereinrichtung 14 und auch Erfassen der Position des zweiten Zubehörteils 42 durch die Positionserfassungseinrichtung 20 hat die Steuereinrichtung 14 durch Vergleich mit Informationen aus der auf ihrem Speichermedium hinterlegten Datenbank festgestellt, dass die erfasste Position mit keiner vorgesehenen, bestimmungsgemäßen Position für dieses Zubehörteil 42 übereinstimmt. Daraufhin hat die Steuereinrichtung 14 die Kommunikationsschnittstelle 16 veranlasst, einen entsprechenden Nutzerhinweis 48 anzuzeigen, hier einen Warnhinweis. Darüber hinaus unterbindet die Steuereinrichtung 14 ein Antreiben des zweiten Zubehörteils 42 durch den Elektromotor 12, bis eine bestimmungsgemäße Position des zweiten Zubehörteils 42 erkannt wird.

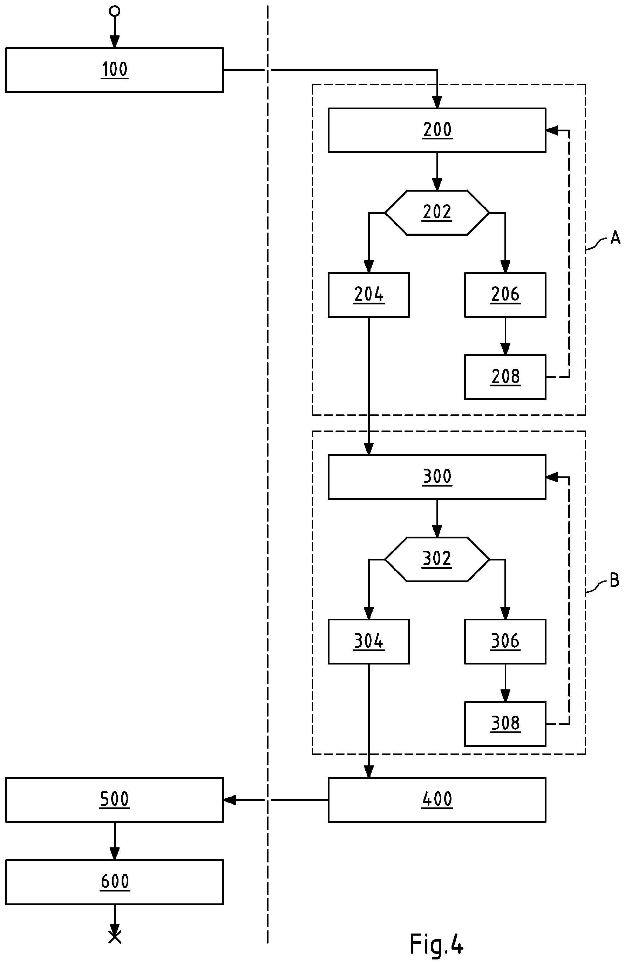

Mit der Fig. 4 wird ein Ausführungsbeispiel für ein Verfahren zur Steuerung eines Küchenmaschinesystems 2 mit einem Ablaufdiagramm gezeigt. In einem ersten Schritt 100 wird eine Anweisung für einen Nutzer zur Verfügung gestellt, wobei die Anweisung ein Einsetzen eines Zubehörteils X betrifft.

Sobald die Anweisung zur Verfügung gestellt ist, beginnt ein Identifizierungsvorgang mit mehreren Schritten, die zusammen in einem Block A dargestellt sind. Als erster Schritt 200 des Identifizierungsvorgangs wird ein Identifikationsmerkmal erfasst. Dann, beim Schritt 202, wird dieses mit Identifikationsmerkmalen verglichen, die in einer Datenbank hinterlegt sind.

Ergibt der Vergleich keine Übereinstimmung, dann wird im Schritt 206 ein Nutzerhinweis ausgegeben, dass das Zubehörteil nicht erkannt worden ist bzw. nicht das Zubehörteil ist, das für den aktuellen Zubereitungsvorgang empfohlen ist. Daraufhin startet eine Wartezeit (Schritt 208), um dem Nutzer die Gelegenheit zu geben, das richtige, für den aktuellen Zubereitungsvorgang empfohlene Zubehörteil einzusetzen. Nach Ablauf dieser Wartezeit wird wieder beim Schritt 200 angefangen.

Ergibt der Vergleich aus dem Schritt 202 eine Übereinstimmung des erfassten Identifikationsmerkmals mit einem Identifikationsmerkmal aus der Datenbank, dann wird ein Positionserkennungsvorgang eingeleitet, dessen Schritte im Block B der Fig. 4 gruppiert sind. Nach positivem Erkennen des Zubehörteils X wird im Schritt 300 seine Position erfasst und dann im Schritt 302 mit für das Zubehörteil X vordefinierten, bestimmungsgemäßen Positionen aus der Datenbank verglichen.

Ergibt der Vergleich keine Übereinstimmung, dann wird im Schritt 306 ein Nutzerhinweis darauf ausgegeben, dass das Zubehörteil nicht bestimmungsgemäß positioniert ist bzw. dass die Gefahr besteht, das Küchenmaschinesystem 2 zu beschädigen, und dass eine Korrektur der Position zu einer bestimmungsgemäßen Position empfohlen ist. Daraufhin startet eine Wartezeit (Schritt 308), um dem Nutzer die Gelegenheit zu geben, die Position des Zubehörteils zu berichtigen. Nach Ablauf dieser Wartezeit wird wieder beim Schritt 300 angefangen.

Ergibt der Vergleich aus dem Schritt 302 eine Übereinstimmung, dann wird im Schritt 400 intern bestätigt, dass das richtige Zubehörteil X bestimmungsgemäß positioniert ist. In dem Schritt 500 wird dann die Anzeige der Anweisung, das Zubehörteil X einzusetzen, beendet. Im folgenden Schritt 600 wird die Anweisung für den nächsten Zubereitungsschritt angezeigt.

## Patentansprüche

1. Küchenmaschinesystem (2)
- mit einem ein Gehäuse (10), eine Steuereinrichtung (14) und eine Kommunikationsschnittstelle (16) aufweisenden Grundgerät (4) und
- mit mindestens einem ein Identifikationsmerkmal aufweisenden Zubehörteil (6, 42),
**dadurch gekennzeichnet,**
- **dass** eine Erfassungseinrichtung (18) vorgesehen und dazu eingerichtet ist, ein Identifikationsmerkmal mindestens eines Zubehörteils (6, 42) zu erfassen und eine entsprechende Information an die Steuereinrichtung (14) weiterzuleiten,
- **dass** eine Positionserfassungseinrichtung (20) vorgesehen und dazu eingerichtet ist, die Position des mindestens einen Zubehörteils (6, 42) in Bezug auf das Grundgerät (4) und / oder in Bezug auf ein weiteres Zubehörteil (6, 42) zu erfassen und eine entsprechende Information an die Steuereinrichtung (14) weiterzuleiten,
- **dass** die Steuereinrichtung (14) dazu eingerichtet ist, auf Basis der weitergeleiteten Informationen ein Zubehörteil (6, 42) und seine Position zu erkennen, und
- **dass** die Steuereinrichtung (14) dazu eingerichtet ist, eine bestimmungsgemäße Position oder Positionsänderung eines erkannten Zubehörteils (6, 42) automatisch zu bestätigen und bei einer nicht bestimmungsgemäßen Position bzw. Positionsänderung oder bei einem nicht erkannten Zubehörteil (6, 42) einen entsprechenden Nutzerhinweis (48) auszugeben.

2. Küchenmaschinesystem (2) nach Anspruch 1,
**dadurch gekennzeichnet,**
**dass** die Steuereinrichtung (14) dazu eingerichtet ist,
- Bestandteile des Küchenmaschinesystems (2) entsprechend mindestens eines vorbestimmten Zubereitungsvorgangs zu steuern und
- den Ablauf eines Zubereitungsvorgangs in Abhängigkeit von der erfassten Position bzw. Positionsänderung und von dem erfassten Identifikationsmerkmal automatisch anzupassen.

3. Küchenmaschinesystem (2) nach Anspruch 1 oder 2,
**dadurch gekennzeichnet,**
**dass** die Steuereinrichtung (14) dazu eingerichtet ist, Anweisungen für Zubereitungsschritte mindestens eines Zubereitungsvorgangs über die Kommunikationsschnittstelle in Abhängigkeit von der erfassten Position bzw. Positionsänderung und von dem erfassten Identifikationsmerkmal automatisch zur Verfügung zu stellen.

4. Küchenmaschinesystem (2) nach einem der Ansprüche 1 bis 3,
**dadurch gekennzeichnet,**
- **dass** für die Durchführung eines Zubereitungsschrittes ein Einsetzen oder ein Entfernen mindestens eines Zubehörteils (6, 42) empfohlen ist, und
- **dass** die Steuereinrichtung (14) dazu eingerichtet ist,
- beim Erkennen eines entsprechenden, bestimmungsgemäßen Einsetzens oder Entfernens des mindestens einen empfohlenen Zubehörteils (6, 42) dies automatisch zu bestätigen und
- den entsprechenden Zubereitungsschritt abzuschließen bzw. eine Anweisung für einen anschießenden Zubereitungsschritt zur Verfügung zu stellen.

5. Küchenmaschinesystem (2) nach einem der Ansprüche 1 bis 4,
**dadurch gekennzeichnet,**
**dass** die Steuereinrichtung (14) dazu eingerichtet ist,
- beim Erkennen eines nicht bestimmungsgemäßen Einsetzens oder eines nicht bestimmungsgemäßen Entfernens bei einem ersten Erfassungsvorgang ein erneuter Erfassungsvorgang nach Ablauf einer vorbestimmten Zeitdauer durchzuführen, und
- beim Erkennen eines nicht bestimmungsgemäßen Einsetzens oder eines nicht bestimmungsgemäßen Entfernens bei dem erneuten Erfassungsvorgang einen entsprechenden Nutzerhinweis (48) zur Verfügung zu stellen und ein Fortführen eines Zubereitungsschritts am Küchenmaschinesystem (2) zu unterbinden.

6. Küchenmaschinesystem (2) nach einem der Ansprüche 1 bis 5,
**dadurch gekennzeichnet,**
- **dass** für die Durchführung eines Zubereitungsschrittes ein Einsetzen mindestens eines Zubehörteils (6, 42) empfohlen ist, und
- **dass** die Steuereinrichtung (14) dazu eingerichtet ist, beim Erkennen der Abwesenheit des mindestens einen empfohlenen Zubehörteils (6, 42) bei einem ersten Erfassungsvorgang einen entsprechenden Nutzerhinweis automatisch zur Verfügung zu stellen und nach Ablauf einer vorbestimmten Zeitdauer einen erneuten Erfassungsvorgang durchzuführen.

7. Küchenmaschinesystem (2) nach einem der Ansprüche 1 bis 6,
**dadurch gekennzeichnet,**
- **dass** für die Durchführung eines Zubereitungsschrittes ein Einsetzen mindestens eines Zubehörteils (6, 42) erforderlich ist, und
- **dass** die Steuereinrichtung (14) dazu eingerichtet ist, beim Erkennen der Abwesenheit des mindestens einen erforderlichen Zubehörteils (6, 42)
- einen entsprechenden Nutzerhinweis automatisch zur Verfügung zu stellen und
- ein Fortführen eines Zubereitungsschritts am Küchenmaschinesystem (2) zu unterbinden, bis ein bestimmungsgemäßes Einsetzen des erforderlichen Zubehörteils (6, 42) erkannt wird.

8. Küchenmaschinesystem (2) nach einem der Ansprüche 1 bis 7,
**dadurch gekennzeichnet,**
- **dass** eine Zubereitungsanleitung mit einer Reihenfolge von Zubereitungsschritten mit entsprechenden Anweisungen vorliegt, und
- **dass** die Steuereinrichtung (14) dazu eingerichtet ist, eine Zur-Verfügung-Stellung einer Anweisung (34, 38) betreffend ein Einsetzen oder ein Entfernen eines Zubehörteils (6, 42) zu überspringen, wenn eine entsprechende bestimmungsgemäße Positionsänderung des Zubehörteils (6, 42) zeitlich bereits vor der Zur-Verfügung-Stellung dieser Anweisung erkannt wurde, und / oder wenn eine entsprechende bestimmungsgemäße Position erkannt wird.

9. Verfahren zur Steuerung eines Küchenmaschinesystems (2), insbesondere eines Küchenmaschinesystems (2) nach einem der Ansprüche 1 bis 8,
- bei dem ein Identifikationsmerkmal mindestens eines Zubehörteils (6, 42) erfasst wird,
- bei dem die Position des mindestens einen Zubehörteils (6, 42) in Bezug auf das Grundgerät (4) und / oder in Bezug auf ein weiteres Zubehörteil (6, 42) erfasst wird,
- bei dem auf Basis des erfassten Identifikationsmerkmals und der erfassten Position ein Zubehörteil (6, 42) und seine Position erkannt werden, und
- bei dem eine bestimmungsgemäße Position oder Positionsänderung eines erkannten Zubehörteils (6, 42) automatisch bestätigt wird und im Fall einer nicht bestimmungsgemäßen Position bzw. Positionsänderung oder im Fall eines nicht erkannten Zubehörteils (6, 42) ein entsprechender Nutzerhinweis (48) ausgegeben wird.

10. Verfahren nach Anspruch 9,
bei dem Bestandteile des Küchenmaschinesystems (2) entsprechend mindestens eines vorbestimmten Zubereitungsvorgangs gesteuert werden, wobei der Ablauf eines Zubereitungsvorgangs in Abhängigkeit von der erfassten Position bzw. Positionsänderung und von dem erfassten Identifikationsmerkmal automatisch angepasst wird.

11. Verfahren nach Anspruch 9 oder 10,
bei dem Anweisungen für Zubereitungsschritte mindestens eines Zubereitungsvorgangs über die Kommunikationsschnittstelle (16) in Abhängigkeit von der erfassten Position bzw. Positionsänderung und von dem erfassten Identifikationsmerkmal automatisch zur Verfügung gestellt werden, insbesondere eine Zur-Verfügung-Stellung einer Anweisung (34, 38) betreffend ein Einsetzen oder ein Entfernen eines Zubehörteils (6, 42) übersprungen wird, wenn eine entsprechende bestimmungsgemäße Position bzw. Positionsänderung des Zubehörteils (6, 42) zeitlich bereits vor der Zur-Verfügung-Stellung dieser Anweisung (34, 38) erkannt wurde.

12. Verfahren nach einem der Ansprüche 9 bis 11,
- bei dem für die Durchführung eines Zubereitungsschrittes ein Einsetzen oder ein Entfernen mindestens eines Zubehörteils (6, 42) empfohlen ist, und
- bei dem beim Erkennen eines entsprechenden, bestimmungsgemäßen Einsetzens oder eines entsprechenden, bestimmungsgemäßen Entfernens des mindestens einen empfohlenen Zubehörteils (6, 42) dies automatisch bestätigt wird und der entsprechende Zubereitungsschritt abgeschossen wird bzw. eine Anweisung für einen anschließenden Zubereitungsschritt zur Verfügung gestellt wird.

13. Verfahren nach einem der Ansprüche 9 bis 12,
- bei dem beim Erkennen eines nicht bestimmungsgemäßen Einsetzens oder eines nicht bestimmungsgemäßen Entfernens bei einem ersten Erfassungsvorgang ein erneuter Erfassungsvorgang nach Ablauf einer vorbestimmten Zeitdauer durchgeführt wird, und
- bei dem beim Erkennen eines nicht bestimmungsgemäßen Einsetzens oder eines nicht bestimmungsgemäßen Entfernens bei dem erneuten Erfassungsvorgang ein entsprechender Nutzerhinweis zur Verfügung gestellt wird und ein Fortführen eines Zubereitungsschritts am Küchenmaschinesystem (2) unterbunden wird.

14. Verfahren nach einem der Ansprüche 9 bis 13,
- bei dem für die Durchführung eines Zubereitungsschrittes ein Einsetzen mindestens eines Zubehörteils (6, 42) empfohlen ist, und
- bei dem beim Erkennen der Abwesenheit des mindestens einen empfohlenen Zubehörteils (6, 42) bei einem ersten Erfassungsvorgang ein entsprechender Nutzerhinweis automatisch zur Verfügung gestellt wird und nach Ablauf einer vorbestimmten Zeitdauer ein erneute Erfassungsvorgang durchgeführt wird, oder
- bei dem für die Durchführung eines Zubereitungsschrittes ein Einsetzen mindestens eines Zubehörteils (6, 42) erforderlich ist, und
- bei dem beim Erkennen der Abwesenheit des mindestens einen erforderlichen Zubehörteils (6, 42) ein entsprechender Nutzerhinweis automatisch zur Verfügung gestellt wird und ein Fortführen eines Zubereitungsschritts am Küchenmaschinesystem (2) unterbunden wird, bis ein bestimmungsgemäßes Einsetzen des erforderlichen Zubehörteils (6, 42) erkannt wird.

15. Computerprogramm mit Befehlen, deren Ausführung auf mindestens einem Prozessor einer Steuereinrichtung eines Küchenmaschinesystems (2) nach einem der Ansprüche 1 bis 8 die Durchführung eines Verfahrens nach einem der Ansprüche 9 bis 14 bewirkt.
